(19) Europäisches Patentamt

European Patent Office

Office européen des brevets

(11) Numéro de publication : **0 499 503 A1**

## (12) DEMANDE DE BREVET EUROPEEN

(21) Numéro de dépôt : **92400231.4**

(22) Date de dépôt : **29.01.92**

(51) Int. Cl.$^5$ : **H02P 6/02**, G05D 23/24

(30) Priorité : **11.02.91 FR 9101550**

(43) Date de publication de la demande :
**19.08.92 Bulletin 92/34**

(84) Etats contractants désignés :
**DE ES GB IT SE**

(71) Demandeur : **ECIA - EQUIPEMENTS ET
COMPOSANTS POUR L'INDUSTRIE
AUTOMOBILE
F-25400 Audincourt (Doubs) (FR)**

(72) Inventeur : **Rudi, Alain
2 rue Colin
F-90850 Essert (FR)**

(74) Mandataire : **Obolensky, Michel et al
c/o CABINET LAVOIX 2, place d'Estienne
d'Orves
F-75441 Paris Cédex 09 (FR)**

(54) **Circuit de commande et de régulation pour moteur électrique à commutation électronique.**

(57) Circuit de commande et de régulation pour moteur électrique à commutation électronique comprenant un circuit électronique (IC2) de gestion et de commande de la commutation des bobines d'induit (B1, B2, B3) du moteur électrique, caractérisé en ce qu'il comprend une sonde (S) de détection d'un paramètre du moteur électrique, un générateur à courant constant (IC3/1, T1, T2, R5, R6) d'alimentation de la sonde (S), un circuit (IC3/2) d'application du signal de sortie de la sonde au circuit de commutation (IC2), et un premier comparateur (IC3/3, R12, R13, R14) de pilotage de l'entrée de validation du circuit de commutation électronique, à partir du résultat de la comparaison entre la tension délivrée par la sonde (S) et une tension de référence.

EP 0 499 503 A1

La présente invention concerne les moteurs à courant continu à commutation électronique et plus particulièrement les circuits de commande et de régulation de tels moteurs.

Comme on le sait, les moteurs à commutation électronique se composent entre autre d'un inducteur et d'un induit bobiné dont les bobines sont commutées par pour un circuit électronique de gestion et de commande.

Ce type de circuit électronique existe déjà dans le commerce sous différentes formes et réalisations. Toutefois, aucun de ces circuits ne correspond aux besoins de moteurs tels que celui décrit dans le brevet n° 89 11 771 déposé le 8 septembre 1989 au nom de la Demanderesse, et qui comporte des moyens de commutation comprenant un connecteur constitué d'un support isolant destiné à être porté par l'induit et des contacteurs munis de cosses pour recevoir des bouts des fils des bobinages d'induits et de plots destinés à venir au contact de contre-plots correspondants d'un circuit imprimé et un module de commande fait d'un substrat isolant qui porte un circuit imprimé destiné à recevoir des composants, y compris ceux de puissance, de circuits électroniques et qui est appliqué et maintenu contre la face intérieure d'un flasque du moteur.

L'invention vise à créer un circuit de commande qui soit particulièrement adapté au montage dans un moteur électrique du type précité.

Elle a donc pour objet un circuit de commande et de régulation pour moteur électrique à commutation électronique comprenant un circuit électronique de gestion et de commande de la commutation des bobines d'induit du moteur électrique, carctérisé en ce qu'il comprend une sonde de détection d'un paramètre du moteur électrique, un générateur à courant constant d'alimentation de la sonde, un circuit d'application du signal de sortie de la sonde au circuit de commutation, et un premier comparateur de pilotage de l'entrée de validation du circuit de commutateur électronique, à partir du résultat de la comparaison entre la tension délivrée par la sonde et une tension de référence.

Selon une autre caractéristique de l'invention, le circuit de gestion et de commutation étant connecté aux bobines d'induit du moteur, par l'intermédiaire de composants de puissance, le circuit de commande comporte des moyens de commande de découpage du courant débité par les bobines d'induit, limitant celui-ci à une valeur prédéterminée, destinés à protéger les composants de puissance contre les surcharges en cas de mises en route fréquentes.

Selon une autre caractéristique de l'invention, le circuit de commande comporte en outre des moyens d'accroissement du niveau d'entrée du premier comparateur par rapport au seuil prédéterminé, en cas de surcharge prolongée du moteur se traduisant par la présence de créneaux de tension à la sortie du second comparateur.

Selon encore une autre caractéristique de l'invention, les composants de puissance connectés à chacune des bobines de l'induit du moteur étant des transistors MOS, entre le drain et la grille de chaque transistor MOS est connecté un circuit de coupure associé à chaque bobine d'induit formé d'une diode en série avec une diode Zener et la grille de chaque transistor est connectée à la masse par une résistance, la tension de Zener de chacune des diodes Zener étant choisie égale à environ deux fois la valeur de la tension d'alimentation et inférieure à la tension de claquage Drain-Source du transistor correspondant.

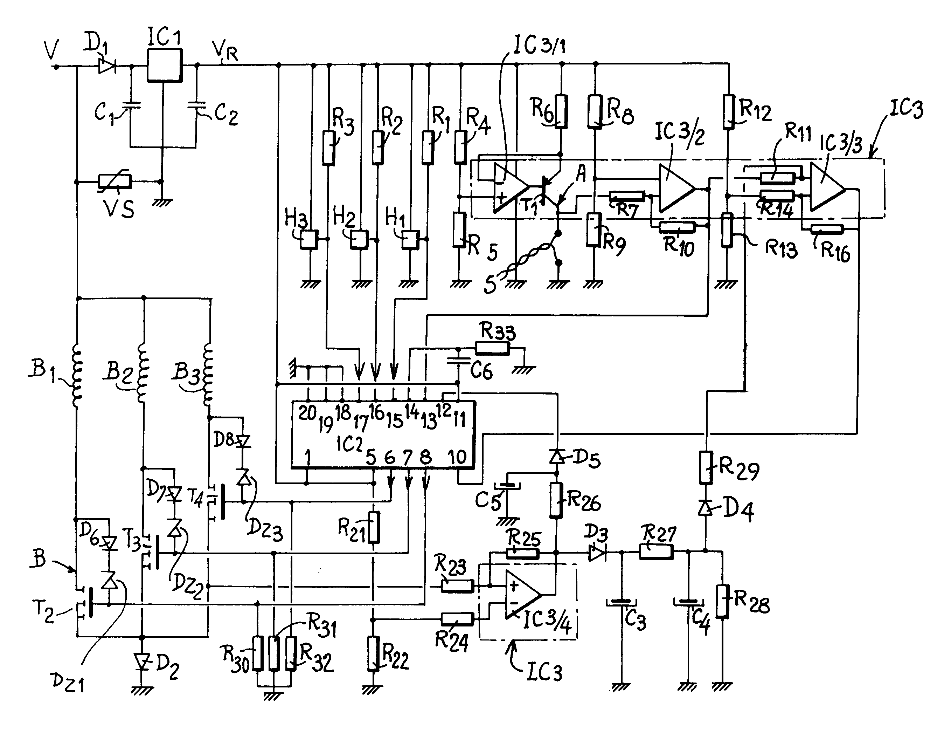

L'invention sera mieux comprise à l'aide de la description qui va suivre, donnée uniquement à titre d'exemple et faite en se référant au dessin annexé, sur lequel :

La Figure unique est un schéma électrique du circuit de commande suivant l'invention.

La description ci-après décrit un circuit de commande qui est particulièrement intéressant par les fonctions qu'il réalise à savoir :

– un pilotage très précis de la vitesse du moteur à partir d'informations fournies par une sonde extérieure;

– un ensemble de dispositif de sécurité à double action qui limite le courant envoyé dans les bobinages en cas de surcharge;

– une sécurité supplémentaire qui protège l'électronique de puissance en cas de blocage du moteur.

L'ensemble de ces fonctions est réalisé à partir de circuits électroniques standard du commerce, mais leur nombre est réduit au strict minimum.

Le circuit représenté au dessin est un circuit de commande de moteur à trois phases. Il est bien entendu que ceci n'est pas limitatif et que le système décrit s'applique à un nombre de phases quelconque.

Le circuit est connecté à une alimentation électrique au point V.

A partir du point V, l'alimentation électrique se divise en deux branches; l'une alimente directement des bobines B1, B2 et B3 d'un moteur et est de plus connectée à une extrémité d'un élément VS appelé varistance dont l'autre extrémité est connectée à la masse. Cet élément écrête les pointes de tension qui peuvent toujours exister sur les lignes, à une valeur que l'électronique montée en aval peut supporter. L'autre branche alimente à travers une diode D1, immunisant une partie du circuit aux inversions de tension, un régulateur de tension IC1 découplé en amont et en aval vers la masse par des condensateurs C1 et C2.

La tension régulée VR présenté à la sortie du régulateur IC1, alimente les broches 1, 5, 11 d'un circuit intégré IC2, de gestion et de commutation, qui constitue le circuit principal du système.

Le circuit IC2 de gestion et de commande est un commutateur pour moteur à courant continu sans balais, par exemple du type LS7261 fabriqué et vendu par la société LSI Computer Systems INC. 1235, Walt Whitman Road, Melville, New York - USA.

Ce circuit comporte des bornes d'entrée et de sortie 1 à 20 dont seules les bornes 2 à 4 et 9 ne sont pas connectées au circuit de la présente invention.

Sont ensuite connectés à la ligne VR de tension régulée, un ensemble de trois capteurs de position H1, H2 et H3 associés au moteur chargés par des résistances R1, R2 et R3 respectivement et connectés par ailleurs à la masse. Les points de jonctions H3 - R3, H2 - R2; H1 - R1 sont eux-mêmes reliés aux broches 15, 16 et 17 respectivement du circuit principal IC2.

Le circuit comporte en outre un sous-ensemble générateur de courant constant réalisé autour d'un amplificateur opérationnel IC3/1.

Cet amplificateur fait partie d'un circuit intégré IC3 représenté par deux rectangles en trait mixte et qui contient quatre amplificateurs opérationnels. L'alimentation des quatre amplificateurs est commune et représentée sur l'amplificateur IC3/1. Une résistance R4 connectée à la tension régulée a son autre extrémité connectée à une résistance R5 et à l'entrée non inverseuse de l'amplificateur IC3/1. La résistance R5 est par ailleurs reliée à la masse. Le pont ainsi constitué fournit une tension de référence à l'entrée non inverseuse de l'amplificateur IC3/1. La sortie de cet amplificateur est connectée à la base d'un transistor T1 du type PNP dont l'émetteur est connecté à une extrémité d'une résistance R6 et à l'entrée inverseuse de l'amplificateur IC3/1. La résistance R6 est par ailleurs connectée à la tension VR. Le collecteur du transistor T1 est relié à une extrémité d'une résistance R7 et à une borne qui associée à la masse est reliée à un capteur de mesure du type résistif appelé ci-après sonde S.

Les composants R4, R5, R6, T1 et IC3/1 sont organisés pour alimenter la sonde S à courant constant. Le circuit comporte ensuite un étage amplificateur constitué autour d'un amplificateur opérationnel IC3/2 et comprenant des résistances R7, R8, R9 et R10.

La résistance R8 à une de ses extrémités connectée à la tension régulée VR, son autre extrémité étant reliée à l'entrée non inverseuse de l'amplificateur IC3/2 et à une extrémité de la résistance R9.

Cette dernière a son autre extrémité connectée à la masse.

Le pont R8, R9 fournit une tension de référence à l'entrée non inverseuse de l'amplificateur IC3/2. La résistance R7 connectée d'une part au transistor T1 a son autre extrémité reliée à l'entrée inverseuse de l'amplificateur IC3/2 et à une extrémité de la résistance R10. L'autre extrémité de la résistance R10 est reliée à une résistance R11 et à la sortie de l'amplificateur IC3/2. L'étage suivant réalisé autour de l'amplificateur opérationnel IC3/3 constitue un comparateur à seuil avec hystérésis. Une résistance R12 a une extrémité connectée à la tension régulée VR. Son autre extrémité est reliée à des résistances R13 et R14.

La résistance R14 est connectée à son autre extrémité à l'entrée non inverseuse de l'amplificateur IC3/3 et à une résistance R16 dont l'autre extrémité est reliée à la sortie de l'amplificateur IC3/3.

L'autre extrémité de la résistance R11 est reliée à l'entrée inverseuse de l'amplificateur IC3/3. La sortie de cet amplificateur est reliée à la borne 10 du circuit intégré IC2.

Le quatrième amplificateur opérationnel IC3/4 est monté en comparateur avec des résistances R21, R22, R23, R24 et R25. Il est chargé par un circuit dont le fonctionnement sera décrit par la suite.

La résistance R21 est connectée par une extrémité à la tension régulée VR, son autre extrémité étant reliée aux résistances R22 et R24. La résistance R22 est par ailleurs reliée à la masse et la résistance R24 est connectée à l'entrée inverseuse de l'amplificateur IC3/4. La résistance R23 a l'une de ses extrémités reliée au point de jonction des drains de trois transistors MOS T2, T3 et T4 et à l'anode d'une diode D2, son autre extrémité étant reliée à l'entrée non inverseuse de l'amplificateur IC3/4 et à une extrémité de la résistance R25. L'autre extrémité de cette résistance est reliée à la sortie de l'amplificateur IC3/4. Ce point est par ailleurs connecté à une extrémité d'une résistance R26 et à l'anode d'une diode D3. La cathode de la diode D3 est reliée à un condensateur C3 dont l'autre extrémité rejoint la masse et à une extrémité d'une résistance R27. L'autre extrémité de cette résistance est reliée à un condensateur C4 et à une résistance R28 et à l'anode d'une diode D4. Le condensateur C4 a son autre extrémité à la masse. Il en est de même pour la résistance R28. La diode D4 a sa cathode reliée à une résistance R29 dont l'autre borne est reliée à l'entrée inverseuse de l'amplificateur IC3/3. L'autre extrémité de la résistance R26 est reliée à l'anode d'une diode D5 et à une extrémité d'un condensateur C5 dont l'autre borne est à la masse. La cathode de la diode D5 est connectée à la borne 12 du circuit intégré IC2.

On va maintenant examiner la construction de la partie de puissance du circuit suivant l'invention.

Les bornes 6, 7 et 8 du circuit principal IC2 sont les sorties utilisées, actives à l'état haut, reliées à la masse à l'état bas.

Les bobines B1, B2, B3 que l'on a vu alimentées par la tension V, ont respectivement leurs autres bornes connectées aux drains des transistors T2, T3 et T4.

Les drains et les grilles de ces transistors sont reliés respectivement par les groupes en série formés chacun d'une diode D6, D7, D8 et d'une diode Zener DZ1, DZ2 et DZ3.

D'autre part, les grilles sont reliées à la masse par les résistances R30,R31 et R32.

Les trois sources des transistors T2, T3 et T4 sont équipotentielles et connectés à l'anode de la diode D2, dont la cathode est à la masse.

Le circuit IC2 nécessite pour son fonctionnement deux éléments extérieurs, la résistance R33 connectée d'un côté à la masse, de l'autre à la borne 14 du circuit IC2 et à une extrémité d'un condensateur C6 dont l'autre extrémité est reliée à la borne 11 et donc à VR.

Le fonctionnement de base est organisé autour du circuit IC2, vendu dans le commerce et dont le brochage classique consiste à entrer les informations des trois capteurs de position H1, H2, H3 et le circuit fournit sur ses trois sorties 6, 7 et 8, les tensions de commande des organes de puissance.

Suivant l'invention, les circuits qui ont été créés autour du circuit IC2 pour le commander sont organisés de façon que l'ensemble réalise des fonctions qui vont être décrites par la suite.

Les composants C6 et R33 fixent pour le circuit IC2 la fréquence d'oscillation d'un générateur à dent de scie interne, qui associé à un comparateur interne dédie la borne 13 comme une entrée de déclenchement appelée "Vtrip" qui permet de faire varier la vitesse du moteur par une variation de largeur d'impulsion de tensions de sortie présentées sur les bornes 6, 7 et 8.

A partir de la sonde S, par exemple de température extérieure au montage décrit, du type résistif, on élabore cette tension "Vtrip".

La variation de résistance de ce type de sonde étant relativement faible, le montage suivant l'invention permet d'obtenir avec précision une vitesse de rotation du moteur en fonction de la valeur de la résistance de cette sonde. La sonde est alimentée à courant constant par l'étage IC3/1 et les composants qui lui sont associés.

Donc quelle que soit la tension d'alimentation V, la tension présente au point A, c'est à dire sur la sonde S, est le reflet exact de la température mesurée par la sonde. Dans le cas décrit, cette précision est de 1 degré Celcius.

Cette tension f ($\theta$) présenté au point A est ensuite amplifiée par l'étage IC3/2, le gain de celui-ci étant défini par les résistances R7 et R10, le décalage par rapport à la masse étant fixé par les résistances R8 et R9.

On constate donc que ce montage permet une grande précision pour fournir "Vtrip" et une plage d'adaptation extrêmement simple car celle-ci ne se fait qu'en ajustant au mieux la valeur de deux résistances. Ceci constitue une première originalité mais le montage seul n'est pas suffisant pour assurer la bonne marche d'un moteur électrique car pour le démarrage lorsque le rapport cyclique est faible le courant moyen dans les bobines est trop bas pour garantir un démarrage correct du moteur. Cet inconvénient est levé par l'étage IC3/3 monté en comparateur qui pilote l'entrée 10 de validation du circuit IC2 appelée "enable".

Donc quand la tension sur la borne 13 du circuit IC2 n'est pas suffisante pour garantir un démarrage, le circuit IC3/3 envoie à la borne 10 l'ordre à IC2 de ne pas générer ses signaux de sortie. Au basculement du seuil défini les résistances R12 et R13, le rapport cyclique déterminé par la borne 13 est alors suffisant et l'on autorise le fonctionnement, ce qui fait que le moteur démarre à coup sûr.

L'association des étages IC3/1, IC3/2 et IC3/3 fournit au circuit IC2 les ordres corrects pour que la vitesse du moteur électrique varie en fonction du paramètre fourni par la sonde S et que son démarrage soit toujours garanti.

Une seconde originalité a été développée autour des problèmes de surcharge. En effet, lorsque ce type de moteur fonctionne, il absorbe un courant que l'on va appeler IN (par exemple IN étant le courant à pleine vitessse au point de fonctionnement défini par la charge entraînée).

Au moment du démarrage, le courant que peuvent absorber les bobines B1 à B3 est bien sûr au moins égal à 10 IN puisqu'il n'y a pas de f.c.e.m.

Il en va de même en cas de blocage accidentel. Dans ce cas, il faut inhiber la commande des transistors de sortie. C'est ce qui est prévu sur l'entrée 12 du circuit IC2.

L'originalité du montage de l'invention consiste à utiliser la diode D2 comme organe de mesure du courant, la diode D2 ayant comme autre rôle de protéger les transistors T2, T3 et T4 contre une inversion de tension.

En effet, les transistors du type MOS sont un court-cirucit en cas d'inversion de polarité, ce qui entraîne soit leur destruction, soit celle des bobines qui leur sont associées en cas d'erreur de branchement.

A partir de la tension présente sur l'anode de la diode D2 qui est le reflet du courant total des bobines ou fait basculer le circuit IC3/4 qui est monté en comparateur à seuil et hystérésis, le seuil étant fixé par les résistances R21 et R22. En reliant la sortie de l'amplificateur IC3/4 directement à la borne 12, de surintensité du circuit IC2, on réalise un oscillateur; en effet, sitôt la surcharge détectée, la commande des transistors est inhibée mais la cause étant supprimée, on réalise ainsi un oscillateur dont la fréquence n'est limitée que par la technologie des composants. C'est pourquoi, l'entrée 12 n'est pilotée qu'après avoir introduit une constante de temps par les composants R26, C5 et D5. Cette constante de temps est finement ajustée pour que le courant moyen soit compatible avec la dissipation thermique des montages et les impératifs d'un courant suffisant pour assurer le démarrage.

On a donc réalisé un circuit de découpage du courant qui limite celui-ci à une valeur prédéterminée de façon que les éléments de puissance ne soient pas soumis à des surcharges en cas de mise en route fréquente.

Néanmoins, malgré ce courant moyenné en cas de blocage franc du moteur, les éléments de puissance finissent par chauffer et ne se stabilisant pas en température, ils risquent la destruction. C'est alors qu'intervient le circuit formé par les composants D3, C3, R27, C4, R28, D4 et R29. En effet, les créneaux de tension qui apparaissent en sortie du circuit IC3/4 en cas de surcharge prolongée chargent à travers la diode D3 le condensateur C3 à la tension crête et progressivement le condensateur C4 à une valeur qui par la diode D4 et la résistance R29 va agir sur le circuit d'inhibition IC3/3. La surcharge ayant cessé, le condensateur C3 se décharge par les résistances R27 et R28 et le condensateur C4, par la résistance R28, ce qui maintient l'inhibition active pendant un temps suffisant au refroidissement des éléments de puissance. Les constantes de temps sont telles que l'ensemble se stabilise en température même en cas de blocage prolongé du moteur, sans aucun phénomène destructif.

On voit donc que la gestion des courants est à double action, ce qui constitue une troisième originalité.

En ce qui concerne le circuit de puissance, on a développé une quatrième originalité qui consiste à ne pas monter sur les charges selfiques, ce que l'homme de l'art a pour habitude de nommer des "diodes de roue libre".

On va considérer le fonctionnement d'une branche de puissance, par exemple celle constituée par la bobine B1, le transistor T2, la diode D6, la diode Zener DZ1 et la résistance R30. Bien entendu, le fonctionnement des autres branches de puissance est identique.

Comme on le sait lorsque l'on coupe brutalement le courant dans une charge selfique, celui cherche à s'écouler (loi de Lenz). Traditionnellement c'est une diode ou une résistance montée en parallèle sur la self qui assure le rôle de charge. Dans le cas présent, le montage de D6, DZ1 et R30, évite l'emploi de tels composants qui doivent être des composants de puissance donc coûteux.

La tension de Zener de la diode Zener DZ1 est choisie à environ deux fois la valeur de la tension d'alimentation et inférieure à la tension de claquage Drain-Source du transistor. Dans ce cas, au blocage du transistor, la tension au point B atteint cette valeur augmentée de la valeur du seuil de la diode D6, donc il y a conduction. Cette conduction associée à la résistance R30 et à l'impédance de la sortie 8 du circuit IC2 font que la tension de grille du transistor T2 provoque une conduction de ce transistor suffisante pour écouler à la masse le courant emmagasiné dans la self de la bobine B1. On a réalisé un système asservi qui protège le drain des transistors contre les tensions dangereuses et qui "éteint" en douceur la bobine précédemment active dans le cycle de fonctionnement du moteur, sans utiliser de composants coûteux.

## Revendications

1. Circuit de commande et de régulation pour moteur électrique à commutation électronique comprenant un circuit électronique (IC2) de gestion et de commande de la commutation des bobines d'induit (B1, B2, B3) du moteur électrique, caractérisé en ce qu'il comprend une sonde (S) de détection d'un paramètre du moteur électrique, un générateur à courant constant (IC3/1, T1, T2, R5, R6) d'alimentation de la sonde (S), un circuit (IC3/2) d'application du signal de sortie de la sonde au circuit de commutation (IC2), et un premier comparateur (IC3/3, R12, R13, R14) de pilotage de l'entrée de validation du circuit de commutation électronique, à partir du résultat de la comparaison entre la tension délivrée par la sonde (S) et une tension de référence.

2. Circuit de commande suivant la revendication 1, dans lequel le circuit de gestion et de commutation (IC2) est connecté aux bobines d'induit (B1, B2, B3) du moteur par l'intermédiaire de composants de puissance (T2, T3, T4), caractérisé en ce qu'il comporte des moyens (D2, IC3/4; R21, R22, R26, C5, D5) de commande de découpage du courant débité par les bobines d'induit, limitant celui-ci à une valeur prédéterminée, destinés à protéger les composants de puissance contre les surcharges en cas de mises en route fréquentes.

3. Circuit de commande suivant l'une des revendications 1 et 2, caractérisé en ce que les composants de puissance étant constitués par des transistors MOS, les moyens de commande de découpage du courant comportent un moyen (D2) de mesure du courant débité par les transistors (T2, T3, T4), un second comparateur (IC3/4, R21, R22) du courant débité par les transistors avec un seuil prédéterminé, un circuit de temporisation (R26, C5, D5) connecté entre la sortie du comparateur (IC3/4, R21, R22) et une entrée (12) de surintensité du circuit de gestion et de commutation (IC2).

4. Circuit de commande suivant l'une des revendications 1 à 3, caractérisé en ce qu'il comporte en outre des moyens (C3, C4, D3, D4, R27, R28, R29) d'accroissement du niveau d'entrée du premier comparateur (IC3/3) par rapport au seuil prédéterminé, en cas de surcharge prolongée du moteur se traduisant par la présence de créneaux de tension à la sortie du second comparateur (IC3/4).

5. Circuit de commande suivant la revendication 4, caractérisé en ce que les moyens d'accroissement du niveau d'entrée du premier comparateur, comprennent un premier condensateur (C3) connecté à la sortie du second comparateur (IC3/4) et destiné à se charger à la valeur de crête de la tension de sortie du second comparateur, un second condensateur (C4) connecté en parallèle avec le premier condensateur avec interposition d'une première résistance (R27), une seconde résistance (R28) étant connectée en parallèle sur le second condensateur (C4), ce dernier étant connecté à l'entrée du premier comparateur (IC3/3) par l'intermédiaire d'une diode (D4) et d'une troisième résistance (R29) connectées en série.

6. Circuit de commande suivant l'une des revendications 1 à 5, caractérisé en ce qu'entre le drain et la grille de chaque transistor MOS (T2, T3, T4) est connecté un circuit de coupure associé à chaque bobine d'induit et formé d'une diode (D6, D7, D8) en série avec une diode Zener (DZ1, DZ2, DZ3) et en ce que la grille de chaque transistor est connectée à la masse par une résistance (R30, R31, R32), la tension de Zener de chacune des diodes Zener (DZ1, DZ2, DZ3) étant choisie égale à environ deux fois la valeur de la tension d'alimentation et inférieure à la tension de claquage Drain-Source du transistor (T2, T3, T4) correspondant.

7. Circuit de commande suivant l'une des revendications 1 à 6, caractérisé en ce que la sonde (S) de détection d'un paramètre du moteur est une sonde de température.

EP 0 499 503 A1

**Office européen des brevets**    **RAPPORT DE RECHERCHE EUROPEENNE**    Numero de la demande

EP 92 40 0231

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-0 054 476 (ACIERS ET OUTILLAGES PEUGEOT) 23 Juin 1982 | 1,7 | H02P6/02 G05D23/24 |
| Y | * page 11, ligne 5 - page 12, ligne 33; figures 3,4 * | 2 | |
| | --- | | |
| A | PATENT ABSTRACTS OF JAPAN vol. 7, no. 146 (P-206)(1291) 25 Juin 1983 & JP-A-58 058 428 ( YAMATAKE HONEYWELL K.K. ) 7 Avril 1983 * le document en entier * | 1,7 | |
| | --- | | |
| A | US-A-3 924 101 (BEARD) 2 Décembre 1975 * colonne 3, ligne 12 - ligne 27; figure 2 * | 1,7 | |
| | --- | | |
| Y | ELECTRONIC ENGINEERING vol. 58, no. 719, Novembre 1986, LONDRES, GB pages 51 - 59; P.DAVIES ET AL.: 'Three phase control and drive IC for brushless motors' * page 52 - page 55; figures 1,2 * | 2 | |
| | --- | | **DOMAINES TECHNIQUES RECHERCHES (Int. Cl.5 )** |
| A | EP-A-0 210 047 (MAGHEMITE INC.) 28 Janvier 1987 * page 13, ligne 22 - ligne 29 * | 2 | H02P H02H G05D |
| | ----- | | |

Le présent rapport a été établi pour toutes les revendications

| Lieu de la recherche | Date d'achèvement de la recherche | Examinateur |
|---|---|---|
| LA HAYE | 12 MARS 1992 | BOURBON R. |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant